# DEMANDE DE BREVET EUROPEEN

(11) **EP 1 156 620 A1**
(43) Date de publication de la demande: **21.11.2001**
(21) Numéro de dépôt: 00401341.3
(22) Date de dépôt: 16.05.2000
(51) Int. Cl.: H04L 12/14, G07F 7/00, G07F 17/16

(54) **Installation perfectionnée d'échange de données dans un réseau, et carte de paiement et procédé associés**

(71) Demandeur: Kosmos, 92975 Paris la Défense (FR)
(72) Inventeur: Soffer, Gil, 75016 Paris (FR)
(74) Mandataire: Vaillant, Jeanne

(57) **Abrégé**

Une installation de télécommunications assure l'échange de données entre des terminaux informatiques (TAi,TMj) raccordés à un réseau informatique, en particulier de type Internet, via un serveur (1) d'un fournisseur d'accès au réseau. Cet échange s'effectue après transmission au serveur, par un utilisateur, d'au moins un identifiant associé à un support (6) d'accès au serveur (1) détenu par cet utilisateur et correspondant à un nombre d'unités prépayées. Le serveur (1) comporte un module de gestion des temps d'accès au réseau (5) qui décompte les unités de chaque support à unités prépayées (6) proportionnellement à son temps d'accès au réseau, et qui associe à chaque unité une valeur monétaire choisie de sorte qu'en cas de transaction effectuée sur le réseau avec un support à unités prépayées (6), un nombre d'unités équivalent au montant de la transaction soit décompté des unités prépayées de ce support.

## Description

L'invention concerne l'échange de données entre des terminaux d'un réseau, en particulier de type Internet

L'invention concerne plus particulièrement les installations de télécommunications comportant une multiplicité de terminaux raccordés à un réseau informatique, de type Internet, et propres à échanger des données après connexion à un serveur d'un fournisseur d'accès au réseau, la connexion entre un terminal et le serveur s'effectuant par transmission au serveur d'au moins un identifiant associé à un support d'accès au serveur. Chaque support est associé à un nombre d'unités prépayées qui peuvent être décomptées par le module de gestion du serveur proportionnellement au temps d'accès au réseau.

Ce type d'installation permet aux utilisateurs des supports d'obtenir des informations contenues dans des sites Internet à partir de n'importe quel terminal, sans avoir besoin d'être abonné et surtout sans que le temps d'accès au réseau ne leur soit facturé séparément par un opérateur téléphonique.

Cela est particulièrement avantageux lorsque les informations sont gratuites puisqu'une fois celles-ci obtenues l'utilisateur peut quitter le terminal d'interrogation sans qu'il n'y ait de suite. Mais, lorsque les informations sont payantes, ou lorsqu'elles sont associées à la commande d'un produit ou d'un service, une transaction financière doit être faîte, ce qui nécessite la communication d'informations bancaires confidentielles, comme par exemple le numéro de compte bancaire ou le numéro de carte bancaire. Ces informations confidentielles sont soit directement transmises par l'acheteur sur le réseau Internet, soit transmises sur un réseau sécurisé par l'intermédiaire d'un « tiers de confiance ». Dans le premier cas, l'acheteur encourt le risque de fournir ses informations confidentielles à une personne mal intentionnée, tandis que dans le second cas il doit payer un abonnement qui augmente le coût du produit ou du service commandé.

L'invention a pour but de remédier à cet inconvénient.

Elle propose à cet effet une installation du type décrit dans l'introduction et dans laquelle le module de gestion du serveur est agencé pour associer à chaque unité une valeur monétaire choisie et, en cas de transaction effectuée sur le réseau avec un terminal ayant accédé à ce réseau avec un support à unités prépayées, pour décompter de ce support un nombre d'unités équivalent au montant de cette transaction.

De la sorte, le support sert simultanément de moyens de paiement du temps d'accès au réseau et de porte-monnaie électronique duquel peut être déduit le montant de la transaction, si bien que son utilisateur peut effectuer des transactions en toute sécurité, sans aucune autre formalité que celle d'enregistrer l'identifiant de son support auprès du serveur, et par conséquent sans que ne lui soit facturé ou débité quoi que ce soit par un opérateur téléphonique ou une banque. L'utilisateur de ce type de support peut donc être réellement qualifié de « nomade ». De plus, cela évite à un utilisateur occasionnel d'avoir à payer un abonnement.

Les supports de ce type sont de préférence des cartes de type carte de paiement, par exemple en PVC.

Par ailleurs, ces supports peuvent être du type dit à « mémoire déportée » ou à « mémoire locale réinscriptible», comme dans le cas des cartes à puce. Dans le premier cas les informations relatives à chaque support sont mémorisées dans une base de données du serveur de l'installation, sous la forme d'une table de correspondance entre les identifiants des supports à unités prépayées préalablement enregistrés et le nombre d'unités associées au support. Dans le second cas la mémoire réinscriptible stocke le nombre d'unités qui est associé à son support. Bien entendu, dans ce second cas les terminaux doivent être équipés d'un moyen de lecture de support, également capable d'actualiser leur contenu, sur ordre.

Selon l'invention, on entend par terminal tout type d'ordinateur ou de téléphone susceptible d'être raccordé à un réseau informatique par voie filaire ou par voie d'ondes.

Dans un mode de réalisation avantageux, le module de gestion du serveur effectue une comptabilisation, en temps réel, du nombre d'unités consommées par l'utilisateur d'un support à unités prépayées et déduit ce nombre d'unités consommées du nombre d'unités stocké dans la base de données ou la mémoire du support, puis retourne à la base de données ou à la mémoire le nombre résultant pour une mise à jour du nombre d'unités prépayées.

Préférentiellement, le module de gestion est capable, en cas de demande de transaction d'un montant fixé, de comparer ce montant au montant qui équivaut au nombre d'unités associé au support utilisé, puis de n'autoriser la transaction que lorsque le montant de cette transaction est inférieur au montant en équivalent d'unités. Cela permet d'accélérer sensiblement les temps de transaction et surtout de garantir aux marchands qu'ils seront payés.

Egalement de préférence, le module de gestion est capable de convertir en unités prépayées chaque versement monétaire d'un possesseur de support et d'ajouter au nombre d'unités associé à l'identifiant de ce support le nombre d'unités issues de la conversion. Cela permet de se servir de la carte comme d'un véritable porte-monnaie électronique pouvant être approvisionné à tout moment.

Selon une autre caractéristique de l'invention, le serveur est agencé, lors de chaque première utilisation d'un support, pour requérir de son utilisateur au moins l'identifiant associé à ce support, puis transmettre au module de gestion cet identifiant de sorte qu'il soit enregistré dans la base de données en correspondance du nombre d'unités associé. Ainsi, le support ne peut être utilisé qu'à condition qu'il ait été préalablement enregistré dans la base de données du serveur, ce qui interdit l'utilisation de supports frauduleux. Mais, le serveur pourra être également agencé pour requérir en même temps un autre identifiant de type « login ».

L'invention concerne également les supports d'accès au serveur, propres à être utilisés dans une installation du type de celle présentée ciavant.

L'invention concerne également un procédé d'échange de données entre des terminaux informatiques raccordés à un réseau informatique, en particulier de type Internet, via un serveur de fourniture d'accès au réseau. Ce procédé se caractérise par les étapes suivantes :
a) accéder au réseau à partir d'un terminal, par transmission d'au moins l'identifiant associé à un support auquel correspond un nombre d'unités prépayées,
b) déduire des unités associées au support un nombre d'unités proportionnel au temps d'accès au réseau, et
c) en cas de transaction effectuée sur le réseau avec ce support, convertir ces unités en une valeur monétaire choisie puis déduire de ces unités un nombre d'unités équivalent au montant de la transaction.

Le procédé pourra comprendre les caractéristiques indiquées ci-après, prises séparément ou en combinaison :
* en cas d'une première utilisation d'un support, on prévoit une étape préliminaire consistant à requérir de l'utilisateur du support la communication d'au moins l'identifiant associé au support pour l'enregistrer dans le serveur en correspondance du nombre d'unités prépayées associé. Cette étape préliminaire peut comporter en outre l'obtention par l'utilisateur du support d'un autre identifiant en vue de son enregistrement par le serveur en correspondance de l'identifiant du support ;
* en cas de demande de transaction d'un montant fixé, on compare dans l'étape c) le montant de cette transaction au montant qui équivaut au nombre d'unités prépayées associées au support utilisé, et on autorise la transaction lorsque ce montant de transaction est inférieur au montant équivalant aux unités ;
* à chaque utilisation du support, on peut requérir de son utilisateur la communication d'au moins l'identifiant associé.

D'autres caractéristiques et avantages de l'invention apparaîtront à l'examen de la description détaillée ci-après, et des dessins annexés, sur lesquels :
- la figure 1 illustre de façon très schématique une installation selon l'invention, et
- la figure 2 est un algorithme illustrant un procédé selon l'invention.

Les dessins annexés sont, pour l'essentiel, de caractère certain. En conséquence, ils pourront non seulement servir à compléter l'invention, mais aussi contribuer à sa définition, le cas échéant.

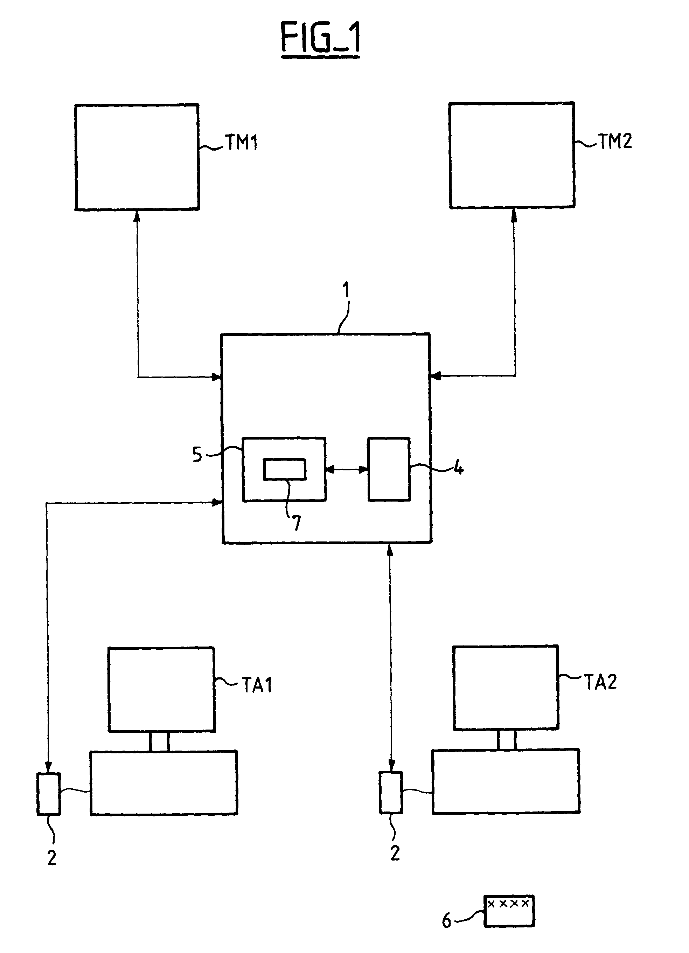

On se réfère tout d'abord à la figure 1 pour décrire une installation de télécommunication permettant l'échange de données entre des terminaux d'acheteurs TAi (ici i = 1,2) et des terminaux de marchands TMj (ici j=1,2), raccordés à un réseau, via un serveur (1). Le réseau est de préférence celui connu sous le nom d'Internet, mais il pourrait s'agir de tout autre réseau d'échange de données.

Ce serveur appartient à un fournisseur d'accès a réseau. Il pourra s'agir de Ksurf de la société KOSMOS TELECOM, ou de Netscape Navigator, ou d'Internet Explorer, ou encore d'Opéra, et analogue. De tels serveurs offrent à leurs abonnés (ou clients) des services gratuits ou payants, et notamment la connexion rapide au site d'un terminal de marchand TMj en vue de commander des produits ou services. Ils proposent également, généralement, un service de transactions en ligne permettant à un acheteur de payer le marchand auprès duquel il vient de passer commande.

La connexion entre un terminal et le réseau s'effectue par l'intermédiaire d'un modem 2. Celui-ci doit être paramétré après l'installation du système d'exploitation (OS), de manière à permettre l'accès à l'un des serveurs 1 de fournisseur d'accès du réseau

La paramétrisation s'effectue tout d'abord par la sélection dans le menu "poste de travail" du terminal soit directement du nom du serveur (par exemple Ksurf) lorsque l'utilisateur du terminal est déjà enregistré comme client, soit indirectement en sélectionnant, par exemple via "Internet Explorer", l'option "Accès réseau à distance" puis l'option "nouvelle connexion" et enfin en saisissant l'adresse du serveur auquel on souhaite se connecter, par exemple "Ksurf.net", puis en faisant enregistrer des informations confidentielles comme un "login" (ou nom d'utilisateur) et un identifiant (ou mot de passe).

Une fois connecté au serveur, le client enregistré est positionné sur un portail qui lui permet d'accéder (ou "surfer") aux (ou parmi les) différents services, comme par exemple "l'achat en ligne" destiné aux commandes de produits ou services.

Le temps d'accès au réseau, par exemple pour effectuer un achat, est soit facturé à l'acheteur via l'opérateur téléphonique auquel il est abonné, soit déduit d'unités de temps prépayées associées à une carte (ou support) 6 achetée dans le commerce.

Ces cartes 6 sont de préférence du même format que les cartes bancaires ou téléphoniques. Elles sont par exemple en PVC et comportent sur l'une de leur face un premier identifiant de type mot de passe ou code PIN, accompagné éventuellement d'un second identifiant de type login. Bien entendu, l'un des deux identifiants peut être dissociés de la carte 6, de manière à rendre inutilisable une carte volée sans ses identifiants. Dans ce cas, l'identifiant dissocié est mentionné sur un document fourni avec la carte 6.

Préférentiellement, ces cartes 6 sont du type dit "à mémoire déportée", de sorte qu'elles ne stockent pas elles-mêmes les informations relatives au nombre d'unités prépayées restantes (c'est-à-dire pas encore utilisées). Cette mémoire est déportée dans une base de données 4 du serveur 1. Plus précisément, la base de données est agencée sous la forme d'une table de correspondance entre les identifiants de carte et les nombres d'unités prépayées associés. On peut également adjoindre à ces deux données-informations un identifiant d'utilisateur.

Préférentiellement, toutes les cartes 6 vendues par le fournisseur de service, par exemple KOSMOS TELECOM, sont pré-enregistrées dans la base de données de manière à interdire l'utilisation de copies frauduleuses.

La gestion des unités prépayées associées à chaque carte (ou support) 6 s'effectue dans un module de gestion 5 du serveur 1 raccordé à la base de données 4. Plus précisément, le module de gestion 5 décompte des unités de temps associées à une carte 6 en cours d'utilisation, et stockées dans la base de données 4, un nombre d'unités équivalent au temps d'accès au réseau, de préférence sensiblement en temps réel de manière à éviter des dépassements de temps d'accès irrécupérables. Par conséquent, le nombre d'unités associé à chaque carte (ou support) 6 en cours utilisation est constamment mis à jour dans la base de données 4, sur ordre du module de gestion 5.

Le module de gestion 5 selon l'invention est également agencé de manière à permettre des transactions en direct, sans action et sans frais supplémentaires, et pas seulement une navigation parmi des sites du réseau.

Pour ce faire, le module de gestion 5 est équipé d'un module de conversion 7 capable de convertir les unités prépayées en une valeur monétaire choisie, par exemple en francs français ou en euros, et/ou réciproquement de convertir des valeurs monétaires en unités prépayées. De la sorte, il est possible d'utiliser les unités associées à une carte 6 pour payer des produits ou services achetés sur un site (ou terminal marchand) TMj du réseau.

Pour finaliser une commande, c'est-à-dire pour procéder à une transaction, l'acheteur n'a donc plus rien à faire. Il suffit simplement que le montant de la transaction soit inférieur au montant équivalent aux unités prépayées associées à sa carte. Ce montant de transaction est donc converti en unités, puis déduit par le module de gestion 5 des unités associées à la carte 6. Le nombre d'unités restantes est alors stocké dans la base de données 4 à la place du nombre précédent, ce qui assure une mise à jour quasi instantanée.

L'installation selon l'invention peut également permettre l'utilisation de cartes (ou supports) 6 réapprovisionnables. Dans ce cas, le serveur 1 comporte un module d'approvisionnement permettant de convertir en unités prépayées un versement monétaire d'un client possesseur de carte. Un tel versement peut s'effectuer selon un procédé sécurisé, par virement bancaire. Le module de gestion 5 extrait ensuite de la base de données 4 le nombre d'unités associé à la carte du client qui vient d'effectuer le versement, puis lui ajoute les nouvelles unités, et enfin retourne le nouveau nombre d'unités à la base de données 4 de sorte qu'il remplace le nombre précédent.

Dans une variante de l'installation, certains au moins des terminaux Tai sont équipés d'un lecteur de support (ou carte) à unités prépayées. Il peut s'agir d'un lecteur externe, ou d'un lecteur interne. Dans ce cas, les cartes sont de préférence du type « carte à puce », et comprennent par conséquent une mémoire locale réinscriptible dans laquelle peuvent être stockées les informations relatives aux unités prépayées restantes, au moins. Bien entendu, les lecteurs de carte sont de préférence capables de lire les informations stockées, mais également de les actualiser sur ordre du serveur de l'installation.

Dans ce qui précède, il a été question de terminaux de type ordinateur raccordé au réseau par voie filaire ou par voie d'ondes, mais il est clair que l'invention vise également les téléphones fixes ou mobiles, raccordés au réseau par voie filaire ou par voie d'ondes. Dans ce dernier cas on utilisera de préférence des téléphones mobiles (ou portables) équipés d'un lecteur de carte de type SIMS, ou bien fonctionnant selon un protocole de communication de type WAP (pour « Wireless Access Protocol ») ou analogue.

L'invention vise en outre les cartes (ou supports) à unités prépayées qui peuvent être utilisées dans une installation du type de celle décrite ciavant, qu'il s'agisse de cartes à mémoire déportée ou à mémoire locale.

Par ailleurs, l'invention vise également un procédé d'échange de données entre des terminaux informatiques raccordés à un réseau informatique, en particulier de type Internet, via un serveur de fournisseur d'accès au réseau. Cette installation comprend au moins les trois étapes indiquées ci-après.

Dans une première étape on accède au réseau à l'aide d'un terminal, en lui transmettant au moins un identifiant d'un support auquel correspond un nombre d'unités prépayées.

Dans une seconde étape on déduit des unités du support un nombre d'unité proportionnel au temps d'accès au réseau.

Et, dans une troisième étape, en cas de transaction effectuée sur le réseau avec le support, on convertit les unités du support en une valeur monétaire choisie, puis on déduit des unités associées au support un nombre d'unités équivalent au montant de la transaction.

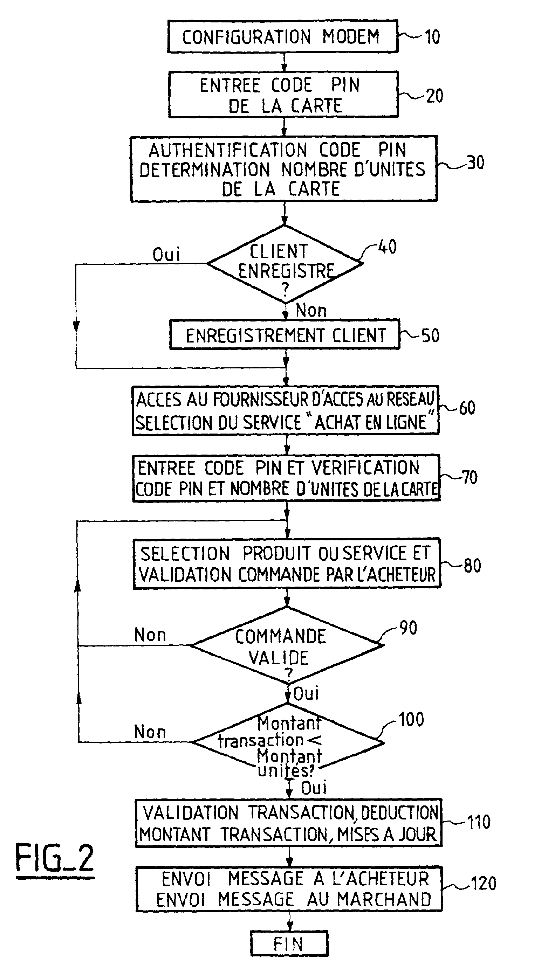

Ce procédé va maintenant être détaillé en référence à la figure 2.

Dans une étape 10, l'utilisateur se connecte à un serveur de fournisseur de service 1, après une éventuelle paramétrisation du modem 2 de ce terminal couplée à un éventuel enregistrement en tant que nouveau client du fournisseur d'accès.

Dans une étape 20, l'utilisateur fournit au serveur un premier identifiant de sa carte 6, par exemple le code PIN qui est inscrit sur la face arrière de la carte.

Dans une étape 30, le serveur 1 vérifie dans la base de données 4 si la carte est authentique (seulement pré-enregistrée ou déjà enregistrée), puis le nombre d'unités prépayées associé à cette carte. Si le code PIN ne correspond pas à un code pré-enregistré ou enregistré, l'utilisateur est invité à saisir une nouvelle fois le code PIN de la carte. Au bout, par exemple, de quatre essais erronés le terminal TAi de l'utilisateur est déconnecté automatiquement du serveur 1. De même, si la carte possède une date limite d'utilisation, le serveur peut en rejeter l'utilisation si cette date limite est dépassée, moyennant l'avertissement de son possesseur.

Dans une étape 40, le serveur vérifie si l'utilisateur est enregistré en tant que client. Dans l'affirmative, on passe directement à l'étape 60, tandis que dans la négative on procède dans une étape 50 à l'enregistrement du client, par exemple en lui demandant de fournir un second identifiant, tel que le login inscrit sur la face arrière de la carte 6, à côté du code PIN.

Dans une étape 60, l'utilisateur accède au portail du fournisseur d'accès et peut sélectionner un service parmi tous ceux proposés. Par exemple, l'utilisateur sélectionne le service "achat payant en ligne" qui va lui permettre d'acheter un produit ou service avec sa carte à unités prépayées 6. Ce produit ou service peut être présenté par le fournisseur d'accès, ou bien être proposé par un terminal marchand auquel on accède par le serveur 1.

Préférentiellement, dans une étape 70, le serveur 1 demande une seconde fois à l'utilisateur de fournir les deux identifiants de la carte 6 (code PIN et login) de manière à les vérifier et à déterminer le montant équivalent aux unités prépayées associées à la carte utilisée. Si le code PIN et/ou le login ne correspondent pas aux identifiants pré-enregistrés ou enregistrés, l'utilisateur est invité à saisir une nouvelle fois le(s) identifiant(s) de la carte. Au bout, par exemple, de quatre essais erronés le terminal TAi de l'utilisateur est déconnecté automatiquement du serveur 1.

Dans une étape 80, l'utilisateur sélectionne le(s) produit(s) et/ou service(s) qui l'intéressent puis valide la commande.

Dans une étape 90, le serveur vérifie la validité de la commande. Cette vérification consiste notamment en une détermination de la disponibilité du produit ou service commandé. Si celle-ci n'est pas valide, l'utilisateur et invité à retourner à l'étape 80. On peut par exemple lui adresser un message lui indiquant que le produit commandé n'est plus disponible.

Si la commande est valide, le serveur convertit dans une étape 100 le montant de la commande (ou montant de transaction) en unités prépayées, après une éventuelle conversion de devises, puis il compare ce nombre d'unités au nombre d'unités prépayées associé à la carte de l'utilisateur. Si ce nombre est supérieur à celui stocké dans la base de données 4, alors l'utilisateur est averti que la transaction ne peut pas se faire et il est invité à retourner à l'étape 80 ou bien à se déconnecter.

En revanche, si le nombre est inférieur à celui stocké, le serveur valide la transaction dans une étape 110, puis déduit le nombre d'unités correspondant au montant de la transaction des unités prépayées stockées dans la base de données en correspondance de l'identifiant de la carte 6 de l'utilisateur. Cette étape peut s'accompagner d'une mise à jour de la base de données des stocks de produits et services ainsi que de la base de données des achats.

Enfin, dans une étape 120, le serveur adresse un message à l'acheteur, par exemple sous la forme d'un courrier électronique ("e-mail"), pour lui indiquer que la transaction est terminée et a été validée. Dans le même temps, un message (e-mail) est adressé soit au fournisseur du propriétaire du serveur (le fournisseur d'accès au réseau) pour qu'il le réapprovisionne en produit ou service (dans le cas où la vente s'effectue en ligne et directement sur le serveur du fournisseur d'accès), soit au marchand pour lui signaler que son compte va être crédité par le compte bancaire du fournisseur d'accès gérant les cartes à unités prépayées.

Il est clair que pendant tout le temps d'accès au réseau, le serveur décompte, en temps réel, des unités prépayées, stockées dans la base de données et associées à la carte en cours d'utilisation, des unités proportionnellement audit temps d'accès.

L'invention ne se limite pas aux modes de réalisation d'installation et de procédé décrits ci-avant, seulement à titre d'exemple, mais elle englobe toutes les variantes que pourra envisager l'homme de l'art dans le cadre des revendications ci-après. Ainsi, on a décrit une installation dans laquelle les cartes (ou supports) à unités prépayées étaient du type à mémoire déportée dans la base de données du serveur, mais certaines au moins des cartes pourraient être du type carte à puce équipée d'une mémoire locale. Dans ce cas, les informations relatives au nombre d'unités prépayées de la carte sont mémorisées dans sa mémoire locale. De plus, les terminaux (au moins certains d'entre eux) doivent être équipés de moyens de lecture de carte, de sorte qu'au début d'un accès au réseau, le serveur puisse extraire de la mémoire locale de la carte le nombre d'unités prépayées associé, puis qu'il en déduise des unités proportionnellement au temps passé et au montant des transactions, et enfin qu'il puisse effectuer des mises à jour de la mémoire locale via le lecteur de carte. Dans cette variante le serveur comporte, de préférence, une base de données des cartes authentiques de manière à pouvoir discriminer les vraies cartes des fausses cartes.

Par ailleurs, on a décrit une installation dans laquelle les terminaux étaient des ordinateurs raccordés par liaison filaire au réseau. Mais, les terminaux, ou au moins certains d'entre eux, pourraient être des téléphones fixes ou mobiles propres à être raccordés au réseau, par voie filaire ou par voie d'ondes. Dans le cas des téléphones mobiles il est avantageux d'utiliser ceux qui mettent en oeuvre un protocole de type WAP ou ceux équipés de lecteurs de carte de type SIMS. Enfin, la transmission des informations au serveur pourra s'effectuer par mode « vocal » (ou plus généralement téléphonique), ou par paquets selon un protocole de type IP, par exemple. La conversion de ces informations pourra s'effectuer en tout endroit, et pas obligatoirement au niveau du serveur.

## Revendications

1. Installation de télécommunications, du type comprenant une multiplicité de terminaux (Tai,TMj) raccordés à un réseau informatique, en particulier de type Internet, et propres à échanger des données par connexion à un serveur (1) d'un fournisseur d'accès audit réseau, ladite connexion entre un terminal et ledit serveur s'effectuant par transmission au serveur (1) d'au moins un identifiant associé à un support (6) d'accès au serveur, correspondant à un nombre d'unités prépayées, et ledit serveur (1) comportant un module de gestion des temps d'accès au réseau (5) propre à décompter les unités de chaque support à unités prépayées (6) proportionnellement à son temps d'accès au réseau, **caractérisée en ce que** ledit module de gestion (5) est en outre agencé pour associer à chaque unité une valeur monétaire choisie et, en cas de transaction effectuée sur le réseau avec un terminal (Tai) ayant accédé à ce réseau avec un support à unités prépayées (6), pour décompter de ce support un nombre d'unités équivalent au montant de ladite transaction.

2. Installation selon la revendication 1, **caractérisée en ce que** certains aux moins des terminaux (Tai) sont équipés de moyens de lecture (3) de supports (6) d'accès au serveur (1), et **en ce que** chaque support à unités prépayées (6) comporte une mémoire réinscriptible propre à stocker le nombre d'unités qui lui est associé.

3. Installation selon la revendication 1, **caractérisée en ce que** le serveur (1) comporte une base de données (4) propre à stocker une table de correspondance entre les identifiants des supports à unités prépayées (6) préalablement enregistrés et le nombre d'unités associées audit support.

4. Installation selon l'une des revendications 2 et 3, **caractérisée en ce que** ledit module de gestion (5) est agencé pour comptabiliser en temps réel le nombre d'unités consommées par l'utilisateur d'un support à unités prépayées (6) et à déduire ce nombre d'unités consommées du nombre d'unités stocké dans la base de données (4) ou la mémoire du support, puis à retourner à ladite base de données (4) ou mémoire le nombre résultant de sorte que le nombre d'unités prépayées stocké soit mis à jour.

5. Installation selon l'une des revendications 1 à 4, **caractérisée en ce que** ledit support à unités prépayées (6) est une carte.

6. Installation selon l'une des revendications 1 à 5, **caractérisée en ce que** ledit module de gestion (5) est agencé, en cas de demande de transaction d'un montant fixé, à comparer ledit montant de la transaction au montant équivalent au nombre d'unités prépayées associées au support (6) utilisé, et à autoriser la transaction lorsque ce montant de transaction est inférieur audit montant en équivalent d'unités.

7. Installation selon l'une des revendications 1 à 6, **caractérisée en ce que** ledit module de gestion (5) est agencé pour convertir en unités prépayées chaque versement monétaire d'un possesseur de support (6) et pour ajouter au nombre d'unités associé à l'identifiant de ce support (6) le nombre d'unités issues de la conversion.

8. Installation selon l'une des revendications 3 à 7, **caractérisée en ce que** ledit serveur (1) est agencé, en cas d'une première utilisation d'un support (6), pour requérir de son utilisateur au moins l'identifiant associé à ce support et transmettre au module de gestion (5) cet identifiant de sorte qu'il soit enregistré dans la base de données (4) en correspondance du nombre d'unités associé.

9. Installation selon la revendication 8, **caractérisée en ce que** le serveur (1) est agencé pour requérir en outre un identifiant d'utilisateur de sorte qu'il soit mémorisé en correspondance de l'identifiant de support (6) et du nombre d'unités associé.

10. Installation selon l'une des revendications 1 à 9, **caractérisée en ce que** certains au moins des terminaux (Tai) sont des ordinateurs.

11. Installation selon l'une des revendications 1 à 10, **caractérisée en ce que** certains au moins des terminaux (Tai) sont des téléphones fixes ou mobiles.

12. Support de type carte à unités prépayées, **caractérisé en ce qu'**il est propre à être utilisé dans une installation selon l'une des revendications 1 à11.

13. Procédé d'échange de données entre des terminaux informatiques raccordés à un réseau informatique, en particulier de type Internet, via un serveur de fourniture d'accès au réseau, **caractérisé en ce qu'**il comprend les étapes suivantes :
a) accéder au serveur par un terminal, en transmettant au moins un identifiant associé à un support d'accès au serveur, correspondant à un nombre d'unités prépayées,
b) déduire des unités du support un nombre d'unité proportionnel au temps d'accès au réseau, et
c) en cas de transaction effectuée sur le réseau avec ledit support, convertir les unités du support en une valeur monétaire choisie puis déduire des unités associées au support un nombre d'unités équivalent au montant de la transaction.

14. Procédé selon la revendication 13, **caractérisé en ce qu'**en cas d'une première utilisation d'un support il comporte une étape préliminaire consistant à requérir de l'utilisateur du support la communication d'au moins l'identifiant dudit support en vue de son enregistrement par le serveur en correspondance du nombre d'unités prépayées associé.

15. Procédé selon la revendication 14, **caractérisé en ce que** dans l'étape préliminaire on requiert en outre de l'utilisateur du support la communication d'un autre identifiant en vue de son enregistrement par le serveur en correspondance de l'identifiant du support.

16. Procédé selon l'une des revendications 13 à 15, **caractérisé en ce que** dans l'étape c), en cas de demande de transaction d'un montant fixé, on compare le montant de la transaction au montant équivalent au nombre d'unités prépayées associées au support utilisé, et on autorise la transaction lorsque ce montant de transaction est inférieur au montant équivalant aux unités.

17. Procédé selon l'une des revendications 13 à 16, **caractérisé en ce qu'**à chaque utilisation du support on requiert de son utilisateur la communication d'au moins l'identifiant associé.
